# EUROPEAN PATENT APPLICATION

(11) **EP 1 705 884 A1**
(43) Date of publication of application: **27.09.2006**
(21) Application number: 05700450.9
(22) Date of filing: 18.01.2005
(51) Int. Cl.: H04M 3/42

(54) **A METHOD FOR ACCESSING THE INTELLIGENT NETWORK**

(30) Priority: 18.01.2004 CN 200410000428
(71) Applicant: Huawei Technologies Co., Ltd., Longgang District, Shenzhen, Guangdong 518129 (CN)
(72) Inventor: MIN, Guobing, Shenzhen, Guangdong 518129 (CN); LI, Lun, Shenzhen, Guangdong 518129 (CN); SUN, Deqiang, Shenzhen, Guangdong 518129 (CN)
(74) Representative: Manitz, Finsterwald & Partner GbR
(86) International application number: PCT/CN2005/000076
(87) International publication number: WO 2005/074242

(57) **Abstract**

The present invention discloses a method for accessing an intelligent network According to the present invention, user input information is pre-stored in an audio frequency signal generating device and an audio frequency signal demodulation unit is pre-set in an SSP/AIP. The access process comprises: the user terminal receives audio frequency signals carrying the user input information sent by the audio frequency signal generating device, and forwards the signals to the SSP/AIP device via the transmission network; the audio frequency signal demodulation unit in the SSP/AIP device demodulates the audio frequency signals, and sends the demodulated user input information to the SCP of the intelligent network; the SCP controls the user terminal to access the intelligent network according to the user input information. The present invention simplifies the user's operating process for accessing the intelligent service and brings convenience to the user.

## Description

### Field of the Technology

The present invention relates to communication network access technologies, and more particularly to a method for accessing an intelligent network .

### Background of the Invention

Intelligent network is a concept standardized by CCITT in 1992. It refers to a system that is able to generate and access various new services in a fast, convenient, flexible, economic and highly effective way. The object of the intelligent network is to provide services for all communication networks.

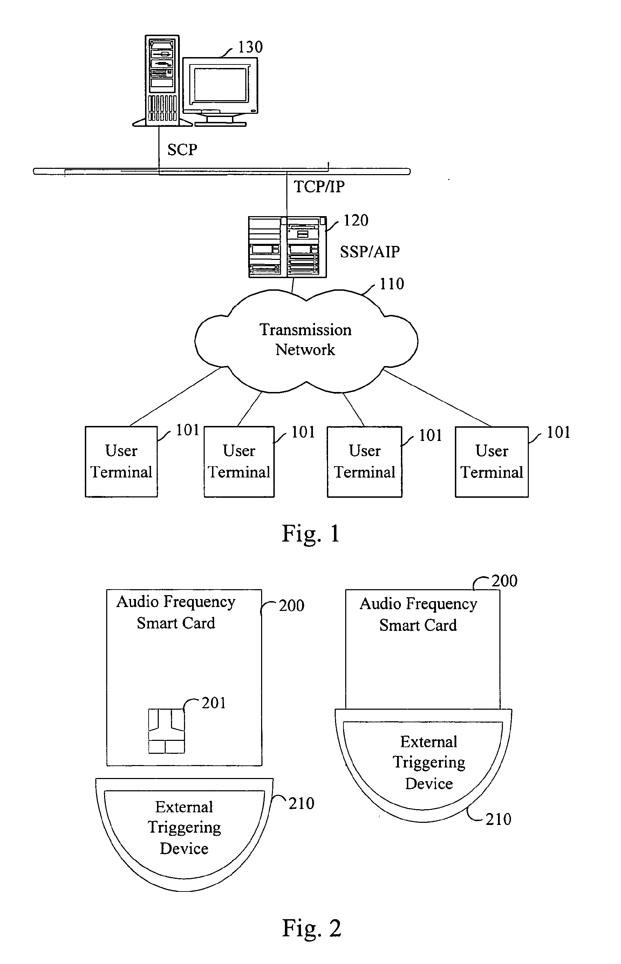

Fig. 1 is a schematic diagram illustrating an elementary architecture of an intelligent network, comprising User Terminals 101, a Transmission Network 110, a Service Switch Point/Advanced Intelligent Peripheral (SSP/AIP) 120, and a Service Control Point (SCP) 130.

Wherein, the User Terminal 101 can be a fixed telephone set or a mobile phone, the Transmission Network 110 can be a Public Switch Telephone Network (PSTN) or a wireless communication network, such as GSM and CDMA.

The SSP serves to access call processing functions and service switch functions. AIP is the special resource assisting to accomplish intelligent services, and it generally has voice functions, for instance, voice synthesis, play announcement, receiving dual tone multi-frequency dial, voice recognition and etc. The AIP can be an independent physical device, or a part of SSP.

The SCP is a core functional part of an intelligent network. It serves to store user data and service logics, and its main functions are to receive the inquiry information from SSP, inquire a database, and conduct various decoding procedures. At the same time, it can also activate different service logics according to call events reported by the SSP, send call control instructions to the corresponding SSP according to the service logics in order to access various intelligent calls.

Currently, the intelligent network has opened many kinds of services including Free Phone (FPH), Account Card Calling (ACC), Virtual Private Network (VPN) Service, Versatile Billing Service, Wide Area Centrex (WAC) Service, Universal Personal Telecommunication (UPT), On-line Emergency Phone Service, Mass Call Service (MAS), Free Call Forwarding Service and Personalized Services.

Wherein, the ACC Service permits its user to make calls at any dual-tone phone set and bills the calls in a specified account, and this specified account is included in the sequence number of the account card. When a user uses the ACC Service, he can first dial the access number on any dual-tone phone set in the area covered by the ACC Service, and then dial his card number and a corresponding password on the phone set following voice prompts. After the system checks and verifies the card number and the password, the user can dial the called number just as he does to make a call normally. For instance, Card 200, Card 201, Card 300, IP card, and Yitong Card all belong to password ACC Service.

Now take Card 200 as an example. The following operations are carried out to access Service 200:
1. The user dials 200, and a voice prompts "Welcome to use Service 200. Dial your card number, please."
2. The user dials his card number with 10 digits or over 10 digits, and a voice prompts: "Dial your password, please";
3. The user dials his password with 6 digits or over 6 digits, and a voice prompts: "Dial a called number, please";
4. The user dials the called number.

It is obvious that when accessing Service 200, the user has to dial long strings of card number and password number, and he has to dial these numbers once more if he makes a mistake in the dialing process, therefore, it is quite troublesome to use this kind of service.

The same issues also exist in the Versatile Billing Service provided by the intelligent network. To be simple, the Versatile Billing Service refers to that the intelligent network provides a pay account to the user, and with this account, the user can pay the charges including water charge, electric power charge, expenses for online shopping, and etc. When the user uses the Versatile Billing Service, he can dial the access number on any dual-tone phone set in the area covered by this Versatile Billing Service, then input the entry for which he pays for, his account number and the corresponding password following voice prompts on the telephone set. Having the dialed account and password been checked and verified, the system carries out associated charging operations. The following operations are carried out to access the service:
1. The user dials an access number of the Versatile Billing Service, and selects an entry for which he pays for following a voice prompt;
2. After the user dials his account number, the voice prompts: "Dial your password, please";
3. After the user dials his password, the system inquires the charge of the entry for which the user pays for, carries out corresponding operations, and notifies the user the payment status.

Therefore, when the user gets accessed to the Versatile Billing Service, he should clearly remember his account number and needs to dial long strings of account number and password; and he has to dial these numbers once again if he makes a mistake in his dialing. Therefore, it is also troublesome to use the Versatile Billing Service.

Additionally, in the case of other services like UPT Service, the user should remember the associated information including the access number, the universal number and the password as well, and he has to input the above information manually for service registration. For instance, in the case of UPT Service that emerged in light of the situation that one user possesses a plurality of communication terminals and numbers, the user can associate the plurality of his communication terminal numbers with a single number of the UPT Service and just tell the others this number. When someone dials this number, the UPT Service translates this number into the associated actual number of the user.

The UPT Service provides the user with the function to associate the numbers of the user's communication devices with his UPT Service number. The traditional practice to implement this function is that the user dials a number to access the UPT Service, inputs his UPT Service number and password, and carries out number association procedure following voice prompts. This association process is called a registration process for the UPT Service.

This registration practice is complicated in operation, and the user has to remember and input the associated information including the access number, the UPT Service number and the password.

UPT Service manual dialing registration refers to that the user manually dials the access number of the UPT Service and then dials the number and password of the UPT Service following voice prompts to accomplish the operation for associating the current calling number and the UPT Service number.

UPT Service manual dialing registration leads to the issues hereinafter:
1. The technical scheme of manual dialing for phone set registration demands the user to memorize associated information such as the UPT Service access number, which brings additional memory burden to the user.
2. The technical scheme of manual dialing for phone set registration demands the user to manually input the UPT Service information such as the service access number, the service number and the password. Therefore, the operation is complicated, and there exist the possibilities of wrong inputting in the operating process, which causes inconvenience in use.
3. The technical scheme of manual dialing for phone set registration demands the user manually input his UPT Service number and password; therefore, it is poor in security. The number might be peeked in the dialing process, which might lead to a result that the number gets stolen.

Therefore, in the process to access the intelligent network, there exist such issues as the user has to memorize a lot of information in his operation, the input operation is troublesome and the input security is low.

### Summary of the Invention

In view of the above, the present invention provides a method for accessing the intelligent network in order to simplify the user's operating process and facilitate the utilization by the user.

According to the present invention, the method for accessing the intelligent network pre-stores the user's input information in an external audio frequency signal generating device of a user terminal and pre-sets an audio frequency signal demodulation unit in an SSP/AIP device of the intelligent network. The service access process comprises:
A. the user terminal receives the audio frequency signals that are transmitted by the audio frequency signal generating device and carry the user input information, and transmits the signals to a switching device in the transmission network;
B. the switching device transmits the received audio frequency signals to the SSP/AIP device via the transmission network;
C. the audio frequency signal demodulation unit in the SSP/AIP device demodulates the received audio frequency signals carrying the user's input information, and sends the demodulated user's input information to an SCP of the intelligent network;
D. The SCP accesses the user terminal into the intelligent network according to the user's input information.

Wherein, The audio frequency signal generating device may be an audio frequency signal generating device that is able to generate DTMF audio frequency signals and FSK audio frequency signals;

The user's input information stored in the audio frequency signal generating device carries the service access number and the service registration information.

When the user accesses the intelligent network for service registration:
Step A comprises: the user terminal first receives DTMF audio frequency signals generated by the audio frequency signal generator carrying the service access number, and transmits the signals to the switching device in the transmission network; after a preset period of time, the user terminal receives the DTMF audio frequency signals or FSK audio frequency signals generated by the audio frequency signal generator carrying the service registration information, and transmits the signals to the switching device in the transmission network;
Step B comprises: the switching device receives the DTMF audio frequency signals carrying the service access number, and triggers an intelligent service according to the service access number, and the switching device sends the later received DTMF audio frequency signals or FSK audio frequency signals carrying the service registration information to the SSP/AIP device via the transmission network according to the intelligent service;
Step C comprises: the audio frequency signal demodulation unit in the SSP/AIP device demodulates the received DTMF audio frequency signals or FSK audio frequency signals carrying the service registration information, and sends the demodulated service registration information to the SCP of the intelligent network;
Step D comprising: the SCP registers the user terminal as an intelligent service terminal according to the service registration information.

The service registration information stored in the audio frequency signal generating device in advance may carries the registration number and password of the user. If the registered service is a UPT Service, the user registration number is the UPT Service number registered by the user.

Step D may comprise the SCP stores the received registration number and password of the user, and registers the user terminal as an intelligent service terminal.

The service registration information stored in the audio frequency signal generating device in advance may carries the personal ID and the password of the user.

Step D may comprise: the SCP stores the received personal ID and password of the user, and registers the user terminal as an intelligent service terminal according to the association relationship between the personal ID of the user stored in the SCP and the intelligent service.

Step B may comprise: the switching device receives the DTMF audio frequency signals carrying the service access number, and goes to the SCP to trigger an intelligent service according to the service access number. The SCP controls the switching device according to the intelligent service and sends the later received DTMF audio frequency signals or FSK audio frequency signals carrying the service registration information to the SSP/AIP device via the transmission network according to the intelligent service;

The audio frequency signal generating device may be a device that is able to generate DTMF signals or a device that is able to generate FSK signals;
the personal input information stored in this audio frequency signal generating device carries the user information;
when the user accesses the intelligent network to receive the intelligent service:
Step A comprises:
   A1. the user terminal receives the access request input by the user manually, and transmits the request to the SSP/AIP via the transmission network of the intelligent network;
   A2. the SSP sends a piece of prompt information with the user terminal via the transmission network according to the access request;
   A3. the user terminal receives the DTMF audio frequency signals or the FSK audio frequency signals that are generated by the audio frequency signal generating device and carry the user information, and transmits the signals to the switching device in the transmission network;
   Step B comprises: the switching device transmits the received DTMF audio frequency signals or FSK audio frequency signals to the SSP/AIP device via the transmission network;
   Step C comprises: the audio frequency signal demodulation unit in the SSP/AIP device demodulates the received DTMF audio frequency signals or FSK audio frequency signals, and sends the demodulated user information to the SCP of the intelligent network;
   Step D comprises: the SCP carries out the successive access steps of the intelligent service according to the access request.
   Step D may comprise: the SCP carries out authentication for the received user information; if the authentication is successful, the SCP carries out subsequent steps of the intelligent service according to the access request; if the authentication is not successful, the SCP notifies the SSP, and the SSP sends to the user a prompt of a failed authentication with the user terminal via the transmission network.

The method can further comprise: setting an authentication unit in the intelligent network;
the DTMF audio frequency signals or FSK audio frequency signals sent by the audio frequency generating device are audio frequency signals carrying encrypted user information;
Step C further comprises: the SCP records the encrypted user information that is demodulated last time, and sends the encrypted user information demodulated this time and the encrypted user information demodulated last time to the authentication unit; the authentication unit carries out authentication for the encrypted user information demodulated this time according to the encrypted user information demodulated last time; if the authentication is successful, the authentication unit returns the encrypted user information to the SCP; otherwise, the authentication unit returns a failed authentication message to the SCP, the SCP notifies the SSP, and the SSP sends a failed authentication prompt message to the user with the user terminal via the transmission network;
Step D further comprises: the SCP decrypts the encrypted user information before it carries out subsequent steps of the intelligent service.

The authentication unit may be an authentication module in the SCP or an authentication server that carries out information interaction with the SCP via TCP/IP.

The user information stored in the audio frequency signal generating device in advance can carry a card number of the ACC Service, or the card number and password of the ACC Service.

The user information stored in the audio frequency signal generating device in advance can carry the user account number of the Versatile Billing Service or the user account number and password of the Versatile Billing Service.

Before the demodulation of the audio frequency signals, Step C further comprises: the SSP/AIP device decides if the signals are converted from the audio frequency signals sent by the audio signal generating device according to the received signals' characteristics, if yes, demodulates the signals; and otherwise, it reads the user's input information from the signals in the original mode of the intelligent service.

The audio frequency signal generating device may be an audio frequency generating device that comprises a triggering device and an audio frequency smart card;

The user's input information is stored in the audio frequency smart card.

The user terminal may be a fixed telephone set, or a mobile terminal or a microphone connected to computer. The transmission network is a PSTN or a wireless communication network. The wireless communication network may be GSM or CDMA.

The technical scheme of the present invention shows that the method for accessing the intelligent network according to the present invention sets an audio frequency signal demodulation unit in the SSP/AIP device of the intelligent network, stores service information or user information in the external audio frequency signal generating device of the user terminal in advance; the user terminal receives the audio frequency signals with the user input information that are transmitted by the audio frequency signal generating device, and transmits the signals to the transmission network; the transmission network transmits the signals to the audio frequency signal demodulation unit in the SSP/AIP device; the audio frequency signal demodulation unit in SSP/AIP device demodulates the received audio frequency signals, and sends the demodulated input information of the user to the SCP; the SCP carries out the intelligent service access according to the received service information or user information.

In the present invention, the user substitutes all or part of the manually input information with audio frequency signals generated by the audio frequency signal generating device to avoid troublesome input of a long piece of information, instead, the user can just relies on audio frequency signals generated by the audio frequency signal generating device. Thus the user's operating process is simplified, and the utilization of the user is greatly facilitated.

### Brief Description of the Drawings

Fig. 1 is a schematic diagram illustrating an elementary architecture of an intelligent network;
Fig. 2 is a schematic diagram illustrating operations of an audio frequency smart card and an external triggering device;
Fig. 3 is a schematic diagram illustrating an architecture of an intelligent service system according to a preferred embodiment of the present invention;
Fig. 4 is a flowchart illustrating the process of a UPT Service registration in the intelligent service system illustrated in Fig. 3;
Fig. 5 is a flowchart illustrating the process of accessing the intelligent service system illustrated in Fig. 3.

### Detailed Description of Preferred Embodiments

Detailed description of the present invention is to be given hereinafter with reference to embodiments and accompanying drawings, so that the object, technical scheme and advantages thereof can be made more apparent.

In the method for accessing the intelligent network according to the present invention, audio frequency signals generated by an audio frequency signal generating device are used to transmit the user input information that needs to be input by the user to the intelligent service system, and an audio frequency signal demodulation unit is set in the SSP/AIP device of the intelligent network to demodulate the user input information, and thus the intelligent network can be accessed with the demodulated input information of the user.

In the present invention, the audio frequency signal generating device may be an audio frequency signal generating device that can generate and transmit DTMF audio frequency signals or/and FSK audio frequency signals. For instance, it may be an audio frequency signal generating device comprising a triggering device and an audio smart card; and it can store the user input information in the audio smart card.

Fig. 2 is a schematic diagram illustrating operations of the audio frequency smart card and an external triggering device, wherein, a Chip 201 on the Audio Frequency Smart Card 200 is used to store the number information. After the Audio Frequency Smart Card 200 is inserted into the External Triggering Device 210, the External Triggering Device 210 identifies the number information and sends the number information via its audio interface repeatedly with a type of authentication sequence signal similar to a MODEM.

The present invention adopts the audio frequency smart card and the external triggering device as illustrated in Fig. 2, wherein, the Audio Frequency Smart Card 200 is triggered by the External Triggering Device 210 to transmit DTMF audio frequency signals or FSK audio frequency signals which carry user information. The service access number, service information or user information is stored in Chip 201 of the smart card in advance.

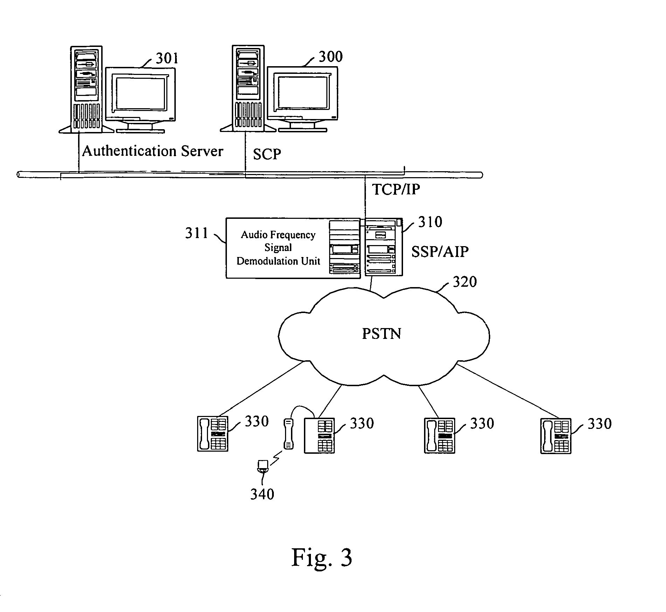

Fig. 3 is a schematic diagram illustrating the architecture of an intelligent service system according to a preferred embodiment of the present invention. The difference between the architecture of this embodiment and the architecture illustrated in Fig. 1 is: an Audio Frequency Signal Demodulation Unit 311 is set in an SSP/AIP Device 310 of the intelligent network, and it is able to demodulate the received audio frequency signals carrying the user input information which further carries the service information or user information, and send the demodulated service information or user information to SCP 300. At the same time, an Authentication Server 301 is set in this embodiment, and it is able to carry out information interaction with SCP 300 via TCP/IP. In this embodiment, the user terminal is a Fixed Telephone Set 330, and the transmission network is PSTN 320. In this embodiment, the Audio Frequency Signal Demodulation Unit 311 is able to demodulate DTMF signals or FSK signals. Since the audio frequency signal demodulation unit can adopt audio frequency signal demodulation mode that is generally adopted by the industry to implement audio frequency signal demodulation, no further description is to be provided.

Wherein, the User terminal 330 receives audio frequency signals carrying encrypted service access number and service information or the user information that are transmitted by the audio frequency smart card, and transmits the signals to the Transmission Network 320; the Transmission Network 320 sends the service information or the user information to the Audio Frequency Signal Demodulation Unit 311 of the SSP/AIP Device 310; the Audio Frequency Signal Demodulation Unit 311 demodulates the received audio frequency signals, and sends the demodulated service information or user information to SCP 300; SCP 300 records the encrypted user information that is demodulated last time, and sends the encrypted service information or user information demodulated this time and the encrypted service information or user information demodulated last time to an authentication unit; i.e., to an Authentication Server 301 according to this embodiment; the Authentication Server 301 carries out authentication for the encrypted service information or user information demodulated this time according to the encrypted service information or user information demodulated last time, and returns the service information or user information that has passed the authentication to SCP 300, or returns an piece of authentication failed information to SCP 300 when the authentication fails; SCP 300 decrypts the received service information or user information, and carries out an intelligent service according to the decrypted service information or user information.

In this embodiment, the encrypted input information of the user is used and an authentication unit is added in order to ensure information security. In actual applications, encrypted or unencrypted input information of the user can be used and the authentication unit may be or may not be added according to the requirements of data security level.

In this embodiment, the user terminal is a fixed telephone set, and the transmission network is PSTN. In actual applications, the user terminal may also be a mobile terminal or a microphone connected with a computer, the transmission network may be a wireless communication network such as GSM or CDMA.

In this embodiment, the authentication unit is an authentication server that carries out information interaction with the SCP via TCP/IP. In actual applications, the authentication unit can also be an authentication module in the SCP.

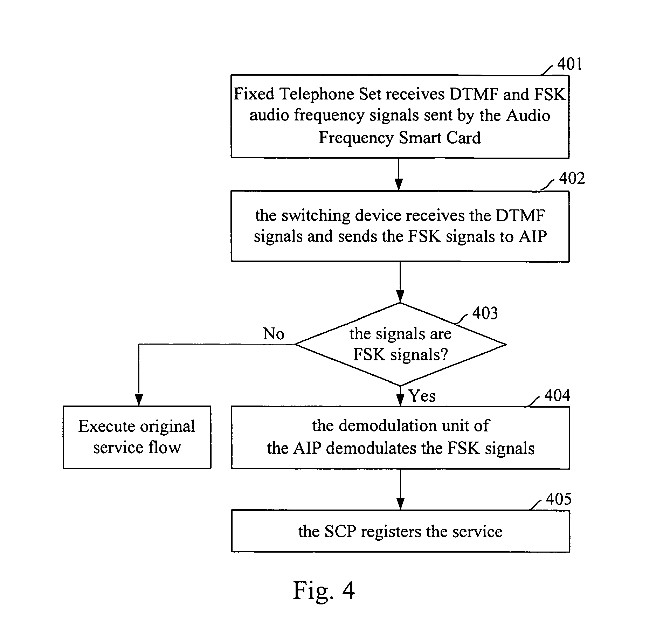

Fig. 4 is a flowchart illustrating the process of a UPT Service registration in the intelligent service system illustrated in Fig. 3. In this flow, the UPT Service access number and the service registration number carrying user registration number and user password are stored in the audio frequency smart card in advance. The flow comprises the following steps:
Step 401: The Fixed Telephone Set 330 receives DTMF audio frequency signals of the service access number sent by the Audio Frequency Smart Card 340 and transmits the signals to a switching device in PSTN 320; after a preset period of time, the Fixed Telephone Set 330 receives FSK audio frequency signals carrying the service registration information sent by the Audio Frequency Smart Card 340 and transmits the signals to the switching device in PSTN 320.
Step 402: The switching device receives DTMF audio frequency signals of the service access number, and triggers an intelligent service in SCP 300 according to the service access number; SCP 300 controls the switching device according to the intelligent service and transmits the received FSK audio frequency signals of the service registration information to the SSP/AIP Device 310 via PSTN 320.
Step 403: Having received the audio frequency signals, the SSP/AIP Device 310 decides whether the signals are the audio frequency signals sent by the Audio Frequency Smart Card 340 according to the characteristics of the received audio frequency; if yes, proceeds to Step 404; otherwise, the SSP/AIP Device 310 reads the service registration information from the signals in the original mode of the intelligent service.
Step 404: The Audio Frequency Signal Demodulation Unit 311 in SSP/AIP Device 310 demodulates the received FSK audio frequency signals of the service registration information, and sends the demodulated service registration information to SCP 300 of the intelligent network.
Step 405: SCP 300 stores the received user registration number and password in the service registration information, and registers the Fixed Telephone Set 330 as a UPT Service terminal.

In this embodiment, the service registration information stored in the audio frequency smart card in advance may be the personal ID and password of the user. In the above process, Step 405 may be: SCP 300 stores the received personal ID and password of the user, and registers the Fixed Telephone Set 330 as an intelligent service terminal according to the association relationship between the personal ID of the user and the UPT Service number stored in SCP300.

The service that adopts this embodiment to register UPT Service can simplify the registration operations of the user in this intelligent service.

In an actual process, the user can pick up the receiver first and then triggers the audio frequency card to send DTMF audio frequency signals by pressing corresponding button(s) of the audio frequency card triggering device. The telephone set transmits the DTMF signals to a PSTN terminal exchange device after it receives the DTMF signals. The exchange device analyzes the DTMF signals and then accesses to the UPT Service. The association registration of the current calling party and the user's UPT Service number is then completed by the UPT Service. The above method relies on the DTMF signals transmitted by audio frequency technologies to accomplish a one-off association registration of the UPT Service number and the calling number.

It demands to deliver the UPT Service access number, the UPT Service number and the UPT Service password to the exchange one-off to accomplish the association registration of the UPT Service number and the calling number one-off. There might be a case in this mode that the numbers are too long for the exchange device to receive. Therefore, in this embodiment, a method of secondary reception of the numbers is adopted to accomplish the association registration of the UPT Service and the calling number, i.e., the user first accesses the UPT Service using DTMF signals sent by the audio frequency card, and then delivers the UPT Service number and password using DTMF signals or FSK signals sent by the audio frequency card, so as to accomplish the association registration of the UPT Service number and the calling number.

It is obvious that, according to the present invention, it is unnecessary for the user to input long service access number, UPT Service number and user password when the user registers the UPT Service, which can prevent input mistakes and is convenient in use.

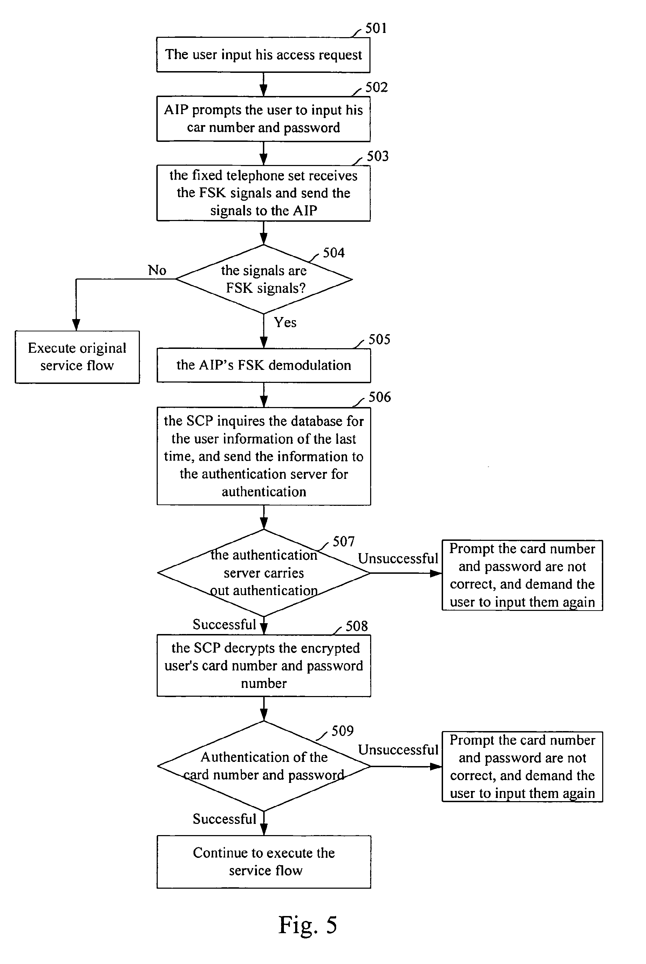

Fig. 5 is a flowchart illustrating the process of accessing the intelligent service system illustrated in Fig. 3.

In this process, the user information is encrypted card number and password of the calling card, or only the encrypted card number of the calling card. In actual applications, the user information can also be unencrypted. Additionally, when accessing to the Versatile Billing Service, the user information may be the account number of the user, or the account number and password of the user, and the account number and password may also be encrypted or unencrypted. In fact, the audio frequency card is able to store all digital information that is not only limited to the above mentioned user information like card number, account number and etc. Therefore, in actual applications, the audio frequency can serve to store other digital information that should be input into the system.

This flow comprises the following steps:
Step 501: The Fixed Telephone Set 330 receives an intelligent service access number input by the user, and sends the intelligent service access number to the SSP/AIP Device 310 via PSTN 320.
Step 502: The SSP/AIP Device 310 sends prompt information to the user by the Fixed Telephone Set 330 via PSTN 320 according to the access request, to demand the user to input his card number and password.
Step 503: The Fixed Telephone Set 330 receives the FSK audio frequency signals sent by the Audio Frequency Smart Card 340 used by the user, and sends the signals to the SSP/AIP Device 310 via PSTN 320.
Step 504: The SSP/AIP Device 310 receives the audio frequency signals sent from PSTN 320, and decides whether the signals are the audio frequency signals sent by an audio frequency card according to the characteristics of the received audio frequency signals; if yes, proceeds to Step 505; otherwise, carries out an original intelligent service flow.
Step 505: The Audio Frequency Signal Demodulation Unit 311 in the SSP/AIP Device 310 demodulates the received audio frequency signals, and sends the encrypted user card number and password that has been demodulated to SCP 300.
Step 506: SCP 300 inquires the encrypted user card number and password that were demodulated last time in a database, and sends the encrypted user card number and password demodulated this time and the encrypted user card number and password demodulated last time to an Authentication Server 301 for authentication.
Step 507: The Authentication Server 301 authenticates the encrypted user card number and password demodulated this time according to the encrypted user card number and password demodulated last time; if the authentication is successful, proceeds to Step 508; otherwise, the Authentication Server 301 returns an authentication failed message to SCP 300, and SCP 300 notifies the information to the SSP/AIP 310; the SSP/AIP 310 then sends a voice prompt by Fixed Telephone Set 330 via PSTN 320 to the user to notify the user that the card number and password of the user are not correct, and prompts the user to input the card number and password of the user again. And then return to Step 503 after the user inputs the card number and password again. Or terminate the flow if the user does not input any information.
Step 508: The Authentication Server 301 sends to SCP 300 the encrypted user card number and password that have passed the authentication, and SCP 300 decrypts the encrypted user card number and password.
Step 509: SCP 300 authorizes the decrypted user card number and password; if the authorization is successful, access to the intelligent network, and continues to carry out the intelligent service; otherwise, SCP 300 notifies the SSP/AIP 310 that the authorization is unsuccessful, and the SSP/AIP 310 sends to the user a voice prompt by the Fixed Telephone Set 330 via PSTN 320 to notify the user that the card number and password of the user are not correct, and prompts the user to input the card number and password of the user again. And then returns to Step 503 after the user inputs the card number and password of the user again. It may terminate the flow if the user does not input any information.

In this embodiment, the Audio Frequency Smart Card 340 can also send the card number and password of the user to the transmission network via DTMF signals.

In this embodiment, an Authentication Server 302 is added in the intelligent service system. In actual applications, it can also be designed as a software authentication module that is set up in SCP 300; or no authentication server or module is set, in such cases, the card number and password stored in the audio frequency smart card are not encrypted, and the above mentioned Steps 506~508 are unnecessary. According to this embodiment, the Authentication Server 301 is set to enhance security.

By adopting the service access process of this embodiment according to the present invention, the access operations of the user in the intelligent service is simplified. And take the Service 200 as an example again, while accessing the Service 200, the following operations should be carried out:
1. A user dials 200, and the voice prompts "Welcome to use Service 200. Input your card number and password, Please";
2. The user triggers an audio frequency smart card, and the output card number and password are input into the system via the fixed telephone set used by the user, and the system's voice prompts: "Dial the called number, Please";
4. The user dials the called number.

It is obvious that, when the user accesses to Service 200, he needs not to input the long card number and password, which can prevent input mistakes and is convenient in use.

It can be seen from the above embodiments, the method to access the intelligent network according to the present invention does not need the user to input long user information, therefore simplifies the user's operating process to access an intelligent service and thus brings convenience to the user.

## Claims

1. A method for accessing an intelligent network, wherein, input information of a user is stored in an external audio frequency signal generating device of a user terminal, and an audio frequency signal demodulation unit is set in a Service Switch Point/Advanced Intelligent Peripheral (SSP/AIP) device of the intelligent network in advance; the accessing method comprising:
A. receiving audio frequency signals carrying the user input information that are transmitted by the audio frequency signal generating device and transmitting the signals to a switching device in a transmission network by the user terminal;
B. transmitting the received audio frequency signals from the switching device to the SSP/AIP device via the transmission network;
C. demodulating the received audio frequency signals carrying the user input information and sending the demodulated input information of the user to a Service Control Point (SCP) of the intelligent network by the audio frequency signal demodulation unit in the SSP/AIP device; and
D. accessing the user terminal to the intelligent network according to the user input information by the SCP.

2. The method according to Claim 1, wherein, the audio frequency signal generating device is an audio frequency signal generating device that is able to generate DTMF audio frequency signals or FSK audio frequency signals;
the user input information stored in the audio frequency signal generating device comprises a service access number and service registration information; and
when the user accesses the intelligent network for service registration:
Step A comprises: the user terminal first receives DTMF audio frequency signals of the service access number generated by the audio frequency signal generating device, and transmits the signals to the switching device in the transmission network; after a preset period of time, the user terminal receives DTMF audio frequency signals or FSK audio frequency signals of the service registration information generated by the audio frequency signal generating device, and transmits the signals to the switching device in the transmission network;
Step B comprises: the switching device receives the DTMF audio frequency signals of the service access number, and triggers an intelligent service according to the service access number, then the switching device sends the DTMF audio frequency signals or FSK audio frequency signals of the service registration information received to the SSP/AIP device via the transmission network according to the intelligent service;
Step C comprises: the audio frequency signal demodulation unit in the SSP/AIP device demodulates the received DTMF audio frequency signals or FSK audio frequency signals of the service registration information, and sends the demodulated service registration information to the SCP of the intelligent network; and
Step D comprises: the SCP registers the user terminal as an intelligent service terminal according to the service registration information.

3. The method according to Claim 2, wherein, the service registration information stored in the audio frequency signal generating device in advance comprises: a registration number and a password of the user.

4. The method according to Claim 3, wherein, if the registered service is a UPT Service, the registration number of the user is a UPT Service number registered by the user.

5. The method according to Claim 3, wherein, Step D comprises: the SCP stores the received registration number and password of the user, and registers the user terminal as an intelligent service terminal.

6. The method according to Claim 2, wherein, the service registration information stored in the audio frequency signal generating device in advance comprises: a personal ID and a password of the user.

7. The method according to Claim 6, wherein, Step D comprises: the SCP stores the received personal ID and password of the user, and registers the user terminal as an intelligent service terminal according to an associated relationship between the personal ID of the user stored in the SCP and the intelligent service.

8. The method according to Claim 2, wherein, Step B comprises: the switching device receives the DTMF audio frequency signals of the service access number, and cause the SCP to trigger the intelligent service according to the service access number; the SCP controls the switching device according to the intelligent service and sends the received DTMF audio frequency signals or FSK audio frequency signals of the service registration information to the SSP/AIP device via the transmission network according to the intelligent service.

9. The method according to Claim 1, wherein, the audio frequency signal generating device is a device that can generate DTMF signals or a device that can generate FSK signals;
the personal input information stored in this audio frequency signal generating device comprises the user information; and
when the user accesses the intelligent network to receive the intelligent service:
Step A comprises:
A1. the user terminal receives an access request input by the user manually, and transmits the request to the SSP/AIP via the transmission network of the intelligent network;
A2. the SSP provides a piece of prompt information by using the user terminal via the transmission network according to the access request; and
A3. the user terminal receives DTMF audio frequency signals or FSK audio frequency signals carrying user information that are generated by the audio frequency signal generating device, and transmits the signals to a switching device in the transmission network;
Step B comprises: the switching device transmits the received DTMF audio frequency signals or FSK audio frequency signals to the SSP/AIP device via the transmission network;
Step C comprises: the audio frequency signal demodulation unit in the SSP/AIP device demodulates the received DTMF audio frequency signals or FSK audio frequency signals, and sends the demodulated user information to the SCP of the intelligent network; and
Step D comprises: the SCP carries out successive access steps of the intelligent service according to the access request.

10. The method according to Claim 9, wherein, Step D further comprising:
authorizing the received user information by the SCP; if the authorization is successful, carrying out successive steps of the intelligent service by the SCP according to the access request; if the authorization is not successful, notifying the SSP that the authorization is not successful by the SCP, and providing by the SSP an authorization failed prompt message by using the user terminal via the transmission network.

11. The method according to Claim 9, further comprising: setting an authentication unit in the intelligent network;
the DTMF audio frequency signals or FSK audio frequency signals sent by the audio frequency generating device are audio frequency signals carrying encrypted user information;
Step C further comprising: recording the encrypted user information demodulated last time, and sending the encrypted user information demodulated this time and the encrypted user information demodulated last time to the authentication unit by the SCP; authenticating the encrypted user information demodulated this time according to the encrypted user information demodulated last time by the authentication unit; if the authentication is successful, returning the encrypted user information to the SCP by the authentication unit; otherwise, returning an authentication failed message to the SCP by the authentication unit; then notifying the SSP by the SCP that the authentication fails, and providing by the SSP an authentication failed prompt message by using the user terminal via the transmission network;
Step D further comprising: decrypting the encrypted user information before carrying out the successive steps of the intelligent service by the SCP.

12. The method according to Claim 11, wherein, the authentication unit is an authentication module in the SCP or an authentication server that carries out information interaction with the SCP via TCP/IP.

13. The method according to Claim 9, wherein, the user information stored in the audio frequency signal generating device in advance comprises a card number of an Account Card Calling (ACC) service, or the card number and a password of the ACC service.

14. The method according to Claim 9, wherein, the user information stored in the audio frequency signal generating device in advance comprises an account number of the user of the Versatile Billing Service or the account number and a password of the user of the Versatile Billing Service.

15. The method according to Claim 1, 2 or 9, wherein, before the demodulation of the audio frequency signals, Step C further comprising: deciding whether the signals are converted from the audio frequency signals sent by the audio signal generating device according to the characteristics of the received signals by the SSP/AIP device; if the signals are converted from the audio frequency signals, demodulating the signals; otherwise, reading the user input information from the signals in an original mode of the intelligent service.

16. The method according to Claim 1, wherein, the audio frequency signal generating device is an audio frequency generating device comprising a triggering device and an audio frequency smart card; and
the user input information is stored in the audio frequency smart card.

17. The method according to Claim 1, wherein, the user terminal is a fixed telephone set, or a mobile terminal, or a microphone connected to a computer; the transmission network is PSTN or a wireless communication network.

18. The method according to Claim 17, wherein, the wireless communication network is GSM or CDMA.
